# EUROPEAN PATENT APPLICATION

(11) **EP 4 542 829 A1**
(43) Date of publication of application: **23.04.2025**
(21) Application number: 23893752.8
(22) Date of filing: 17.11.2023
(51) Int. Cl.: H02K 5/20, H02K 5/10, H02K 5/04, H02K 9/19, H02K 11/33, H05K 7/20

(54) **ELECTRIC DRIVE SYSTEM SHELL FOR VEHICLE AND VEHICLE**

(30) Priority: 22.11.2022 CN 202211466923
(71) Applicant: XPT EDS (Hefei) Co., Ltd., Hefei City, Anhui 230601 (CN)
(72) Inventor: ZHANG, Weizhou, Shanghai 201804 (CN); ZHANG, Ce, Shanghai 201804 (CN); REN, Chuanwei, Shanghai 201804 (CN)
(74) Representative: Vossius & Partner Patentanwälte Rechtsanwälte mbB
(86) International application number: PCT/CN2023/132413
(87) International publication number: WO 2024/109662

(57) **Abstract**

The invention provides a motor drive system housing for a vehicle, and a vehicle. The motor drive system housing comprises: an upper housing, which comprises an upper controller housing and an end cover for covering the upper controller housing, the end cover being detachably and fixedly connected to the upper controller housing, and a partition being provided in the upper controller housing; and a lower housing, which is located below the upper housing and comprises at least a lower controller housing, an electric motor housing and a reducer housing which are integrally formed, wherein the lower controller housing is detachably and fixedly connected to the upper controller housing to form a controller housing, and the partition divides the controller housing into at least two chambers in which various power electronic modules of the vehicle are mounted. The problem of low integration degree of the existing motor drive system all-in-one housings in the prior art is solved.

## Description

### REFERENCE TO PRIORITY APPLICATION

The invention claims priority to Chinese Invention Patent Application No. 202211466923.7 filed on November 22, 2022. The content of this patent application is incorporated herein by reference in its entirety.

### Technical Field

The invention relates to the field of automobiles, and specifically provides a motor drive system housing for a vehicle, and a vehicle.

### Background Art

A new energy vehicle motor drive system is a core component of a new energy vehicle, has functions equivalent to those of an engine and a gearbox of a fuel vehicle, and mainly includes an electric motor, a controller and a transmission assembly. According to instructions of a vehicle control unit, the controller inverts high-voltage direct current transmitted by a battery pack into three-phase alternating current to drive the electric motor to rotate, and then reduces the speed by means of a reducer to increase the output torque, so as to drive wheels to rotate. The motor drive system conforms to the development trend of integration, is mainly reconstructed and upgraded to a multi-component integration system, and gradually advances from hardware integration to electrical integration and chip integration, forming an all-in-one powertrain system having more comprehensive functions.

The Chinese Utility Model Patent CN 208754130 U discloses a controller, reducer and electric motor three-in-one housing structure. The three-in-one housing structure includes a controller housing, a reducer housing and an electric motor housing which are integrally formed by casting, wherein the controller housing, a reducer half-housing, an electric motor end cover and the electric motor housing are integrally formed by casting; water channels and high and low pressure interfaces are integrally formed by casting; and an electric motor water channel is designed as a radial M-shaped water channel. After cooling water is discharged from the controller, the water channel of the common portion of the housing is first cooled, which prevents adverse effect on the controller due to the high temperature of the electric motor. The three-in-one housing structure has an integrated design with a common housing, which reduces the amount of material consumption and reduces the parts designed and used for mutual fixing and sealing. However, the structure of the controller housing results in a low integration degree of the components therein.

Therefore, there is a need for a novel technical solution in the art to solve the problems described above.

### Summary

In order to solve the problem of low integration degree of the existing motor drive system all-in-one housings in the prior art, the invention provides a motor drive system housing for a vehicle. The motor drive system housing according to the invention includes: an upper housing, which includes an upper controller housing and an end cover for covering the upper controller housing, the end cover being detachably and fixedly connected to the upper controller housing, and a partition being provided in the upper controller housing; and a lower housing, which is located below the upper housing and includes at least a lower controller housing, an electric motor housing and a reducer housing which are integrally formed, wherein the lower controller housing is detachably and fixedly connected to the upper controller housing to form a controller housing, and the partition divides the controller housing into at least two chambers in which various power electronic modules of the vehicle are mounted.

According to the invention, the controller housing is divided into an upper controller housing and a lower controller housing, and a partition is provided in the upper controller housing. After the upper controller housing and the lower controller housing are fitted together, the partition divides the controller housing into at least two chambers, so that the space inside the controller housing can be fully utilized to improve the integration degree of power electronic modules mounted inside the controller housing. The arrangement of the end cover facilitates the installation and maintenance of the power electronic modules in the upper chamber of the controller. The lower controller housing, the electric motor housing and the reducer housing are integrally formed by casting, so that the connectors originally needed between the three parts are eliminated, which reduces the difficulty of machining and assembly processes of the motor drive housing. On the other hand, the three parts are integrated, so that the size is smaller than the original, which reduces the space occupied by the motor drive system housing inside the vehicle. Further, since the controller housing is integrated with the electric motor housing, the connection wiring harness for the controller and the electric motor is transferred from the outside to the inside of the housing, thereby optimizing the space inside the vehicle and improving the aesthetics.

In a preferred technical solution of the motor drive system housing for a vehicle described above, the at least two chambers include a first chamber and a second chamber, wherein the first chamber is enclosed by the end cover, a side wall of the upper controller housing, and the partition; and the second chamber is enclosed by the lower controller housing and the partition. In the arrangement of two chambers, the space in the controller housing is divided into an upper layer and a lower layer, and a detachable end cover is provided to facilitate the maintenance and replacement of the power electronic modules in the first chamber; and the detachable and fixed connection between the upper controller housing and the lower controller housing facilitates the maintenance and replacement of the power electronic modules in the second chamber, thereby improving space utilization.

In a preferred technical solution of the motor drive system housing for a vehicle described above, a vertical baffle is provided on the partition and perpendicular to the partition, and divides at least one of the first chamber and the second chamber into a plurality of sub-chambers. Providing the vertical baffle further improves the utilization of the internal spaces of the first chamber and the second chamber and enables each power electronic module to be more stably fixed in the sub-chamber that matches its shape. In addition, the vertical baffle can also reduce the electromagnetic interference between the power electronic modules.

In a preferred technical solution of the motor drive system housing for a vehicle described above, the plurality of sub-chambers include a first sub-chamber located in the first chamber, a second sub-chamber located in the second chamber, and a third sub-chamber extending from the first chamber to the second chamber, wherein the first sub-chamber is configured for mounting an inverter, the second sub-chamber is configured for mounting a DC/DC converter, and the third sub-chamber is configured for mounting a high-voltage power distribution module. The integrated installation of the inverter, the DC/DC converter and the high-voltage power distribution module reduces the arrangement of the external connection wiring harness of the motor drive housing, which improves the integration degree of the motor drive system housing to further reduce the space occupied inside the vehicle.

In a preferred technical solution of the motor drive system housing for a vehicle described above, a controller coolant inlet is formed in the side wall of the upper controller housing for introducing a coolant into the upper controller housing; and the partition is integrally formed with the side wall, and a cooling flow channel is formed in the partition and is in communication with the controller coolant inlet. With the above configuration, the cooling flow channel in the partition can cool the power electronic modules in the controller housing, and the integrally formed partition and cooling flow channel can not only improve the sealing performance of the coolant flow path, but also reduce the manufacturing difficulty of the cooling flow channel.

In a preferred technical solution of the motor drive system housing for a vehicle described above, the cooling flow channel includes a first flow channel and a second flow channel connected in series, the first flow channel being formed in a lower surface of the partition, and the second flow channel being formed in an upper surface of the partition. With the above configuration, the first flow channel and the second flow channel form a coolant flow path, so that the power electronic modules in the first sub-chamber and the second sub-chamber can be cooled simultaneously by one coolant flow path, thereby improving the thermal management capability of the controller housing.

In a preferred technical solution of the motor drive system housing for a vehicle described above, the first flow channel includes a first inlet and a first outlet, the first inlet being in communication with the controller coolant inlet; and the second flow channel includes a second inlet and a second outlet, the second inlet being in communication with the first outlet, such that the coolant flows into the first flow channel from the first inlet, flows out of the first flow channel from the first outlet and enters the second flow channel, and then flows out of the second flow channel via the second outlet. The second flow channel is configured to cool the inverter module that usually has a pin-fin heat dissipation structure to match the second flow channel, so that the above configuration prevents the coolant from directly impacting the easily damaged heat dissipation structure of the inverter module, and the flow path of the coolant flowing from the first flow channel located in the lower surface of the partition into the second flow channel located in the upper surface has small flow resistance, which can improve the cooling effect.

In a preferred technical solution of the motor drive system housing for a vehicle described above, a controller coolant outlet is formed at the bottom of the lower controller housing for introducing the coolant into the electric motor housing, and the controller coolant outlet is in communication with the second outlet and in communication with an electric motor coolant inlet formed in the electric motor housing. With the above configuration, the coolant flow paths of the controller and the electric motor are connected in series, which reduces the cooling pipelines to further improve the integration degree of the motor drive system housing.

In a preferred technical solution of the motor drive system housing for a vehicle described above, the second outlet extends through a tubular member to a lower surface of the partition. With the configuration of the tubular member, the second outlet and the controller coolant outlet can be connected together in a sealing manner when the upper housing and the lower housing are fixedly fitted.

In order to solve the problem of low integration degree of the existing motor drive system all-in-one housings in the prior art, the invention further provides a vehicle which uses a motor drive system housing for a vehicle as described in any one of the above technical solutions. Using the motor drive system housing as described in any one of the above technical solutions improves the space utilization and the NVH performance of the vehicle according to the invention.

### Brief Description of the Drawings

Preferred implementations of the invention are described below with reference to the accompanying drawings, in which:
FIG. 1 is a schematic assembly diagram of an embodiment of a motor drive system housing for a vehicle according to the invention;
FIG. 2 is an exploded view of an embodiment of a motor drive system housing for a vehicle according to the invention;
FIG. 3 is a schematic diagram of an upper controller housing of an embodiment of a motor drive system housing for a vehicle according to the invention;
FIG. 4 is a schematic diagram of a first chamber of an embodiment of a motor drive system housing for a vehicle according to the invention;
FIG. 5 is a schematic diagram of a second chamber of an embodiment of a motor drive system housing for a vehicle according to the invention;
FIG. 6 is a schematic diagram of a first flow channel of an embodiment of a motor drive system housing for a vehicle according to the invention;
FIG. 7 is a schematic diagram of a lower controller housing of an embodiment of a motor drive system housing for a vehicle according to the invention;
FIG. 8 is a cross-sectional view of an embodiment of a motor drive system housing for a vehicle according to the invention; and
FIG. 9 is a partial enlarged view of part A of the motor drive system housing for a vehicle according to an embodiment of the invention in FIG. 8.

### List of reference signs:

1. motor drive system housing; 10. upper housing; 11. controller housing; 11a. upper controller housing; 11b. lower controller housing; 111. first vertical wall; 112. mounting hole; 113. controller coolant inlet; 114. controller coolant outlet; 115. bottom surface; 116. second vertical wall; 117. support stage; 118. through hole; 12. end cover; 13. partition; 131. fixing column; 132. first vertical baffle; 133. copper busbar passing hole; 134. second vertical baffle; 135. first wiring hole; 136. third vertical baffle; 137. second wiring hole; 138. first flow channel; 138a. first flow section; 138b. second flow section; 1381. water flowing channel; 1382. cover plate; 13821. water outlet nozzle; 13822. annular groove; 1383. separation rib; 1384. first inlet; 1385. first outlet; 1386. flow guide rib; 13861. drainage opening; 139. boss; 1391. second flow channel; 13911. second inlet; 13912. second outlet; 1392. edge; 14. first chamber; 141. first sub-chamber; 142. third sub-chamber; 143. fourth sub-chamber; 15. second chamber; 151. second sub-chamber; 20. lower housing; 21. electric motor housing; 211. outer water jacket; 212. inner water jacket; 213. electric motor cooling flow channel; 2131. electric motor coolant inlet; 2132. electric motor coolant outlet; 22. reducer housing; 23. electric motor end cover; 24. reducer end cover.

### Detailed Description of Embodiments

Preferred implementations of the invention will be described below with reference to the accompanying drawings. Those skilled in the art should understand that these implementations are merely used to explain the technical principles of the invention, and are not intended to limit the scope of protection of the invention.

It should be noted that, in the description of the invention, the terms that indicate the direction or positional relationship, such as "upper", "lower", "left", "right", "inner", and "outer", are based on the direction or positional relationship shown in the figures, which is merely for ease of description instead of indicating or implying that the apparatus or element must have a particular orientation and be constructed and operated in a particular orientation, and therefore, should not be construed as limiting the invention. In addition, the terms "first" and "second" are used for descriptive purposes only, and cannot be construed as indicating or implying relative importance.

In addition, it should also be noted that, in the description of the invention, the terms "dispose" and "connect" should be interpreted in a broad sense unless explicitly defined and limited otherwise. For example, a connection may be a fastened connection, a detachable connection, or an integral connection; and may be a direct connection, an indirect connection by means of an intermediary, or internal communication between two elements. For those skilled in the art, the specific meanings of the foregoing terms in the invention can be interpreted according to a specific situation.

In order to solve the problem of low integration degree of the existing motor drive system all-in-one housings in the prior art, the invention provides a motor drive system housing 1 for a vehicle. The motor drive system housing according to the invention includes: an upper housing 10, which includes an upper controller housing 11a and an end cover 12 for covering the upper controller housing, the end cover 12 being detachably and fixedly connected to the upper controller housing 11a, and a partition 13 being provided in the upper controller housing 11a; and a lower housing 20 located below the upper housing 10, the lower housing 20 including at least a lower controller housing 11b, an electric motor housing 21 and a reducer housing 22 which are integrally formed, the lower controller housing 11b being detachably and fixedly connected to the upper controller housing 11a to form a controller housing 11, and the partition 13 dividing the controller housing 11 into at least two chambers in which various power electronic modules of the vehicle are mounted.

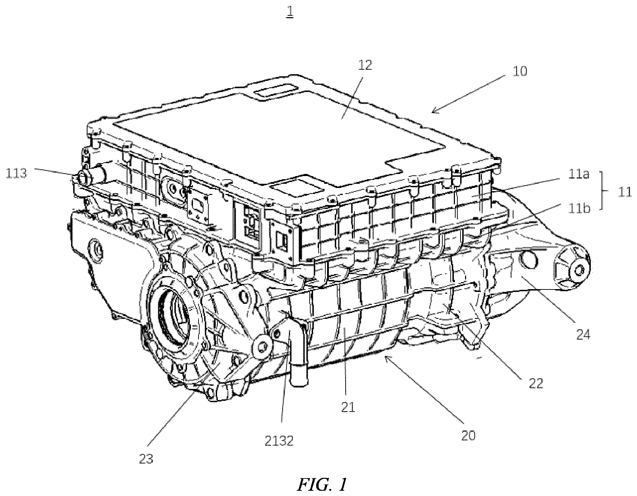

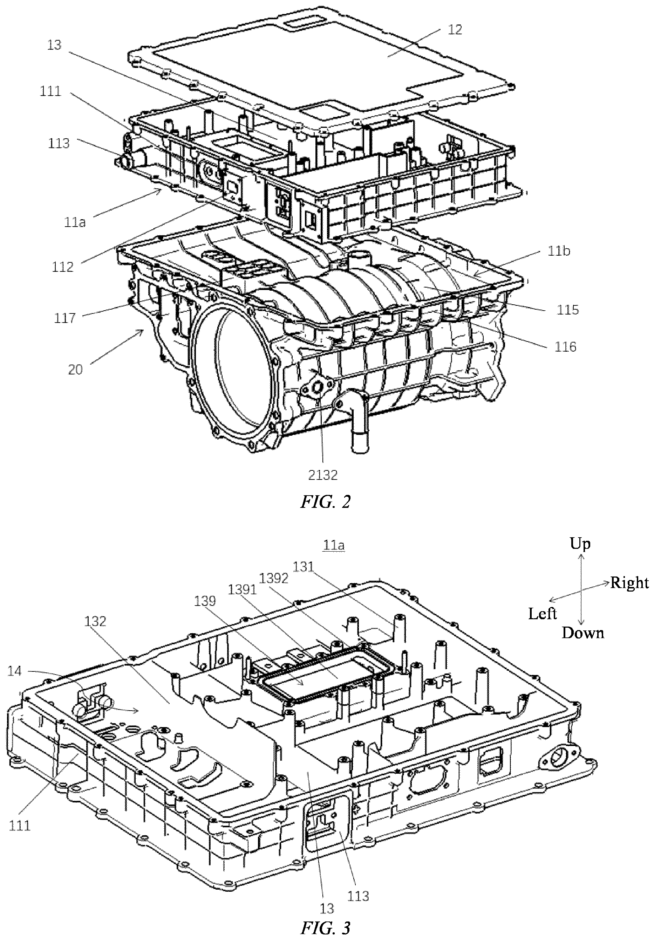

FIG. 1 is a schematic assembly diagram of an embodiment of a motor drive system housing for a vehicle according to the invention, and FIG. 2 is an exploded view of an embodiment of a motor drive system housing for a vehicle according to the invention. As shown in FIGS. 1 and 2, the motor drive system housing 1 for a vehicle according to the invention includes an upper housing 10 and a lower housing 20 located below the upper housing 10. In one or more embodiments, the upper housing 10 and the lower housing 20 are both made of an aluminum alloy material, which enables the motor drive system housing 1 to be lightweight while ensuring the strength thereof. Alternatively, at least one of the upper housing 10 and the lower housing 20 may be made of a steel material to improve the stiffness of the housing. The upper housing 10 includes an upper controller housing 11a and an end cover 12. The lower housing 20 includes a lower controller housing 11b, an electric motor housing 21 and a reducer housing 22 which are integrally formed by casting. The electric motor housing 21 and the reducer housing 22 are arranged side by side, and the lower controller housing 11b is located above the electric motor housing 21 and the reducer housing 22. The detachable and fixed connection between the upper housing 10 and the lower housing 20 enables the upper controller housing 11a and the lower controller housing 11b to form the controller housing 11. A sealing rubber strip is provided on a contact surface between the upper controller housing 11a and the lower controller housing 11b, and cooperates with a fastener to achieve the water-proofing, dust-proofing and shock absorption effects.

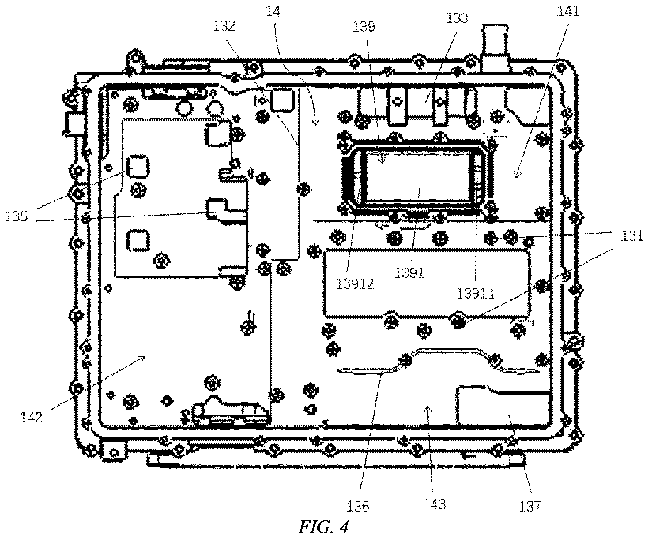

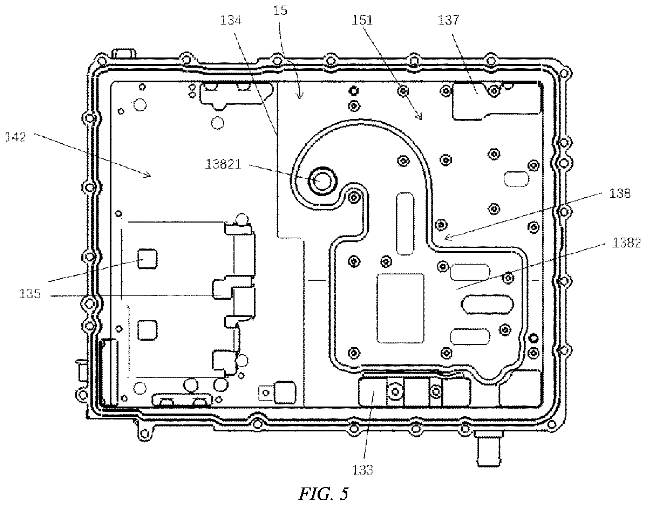

FIG. 3 is a schematic diagram of an upper controller housing of an embodiment of a motor drive system housing for a vehicle according to the invention, FIG. 4 is a schematic diagram of a first chamber of an embodiment of a motor drive system housing for a vehicle according to the invention, and FIG. 5 is a schematic diagram of a second chamber of an embodiment of a motor drive system housing for a vehicle according to the invention. As shown in FIGS. 2 and 3, the upper housing 10 includes an upper controller housing 11a, an end cover 12 and a partition 13.

As shown in FIGS. 2 and 3, in one or more embodiments, the upper controller housing 11a is configured as a substantially rectangular frame formed by four first vertical walls 111, and a plurality of mounting holes 112 are formed in the first vertical walls 111. The mounting holes 112 are configured for mounting wiring terminals (not shown) that match the external connection wiring harness. The external connection wiring harness is configured to connect the power electronic modules in the controller housing 11 to other external components. In one or more embodiments, the other external components include but are not limited to a battery pack, a low-voltage battery, a PTC heater, an air conditioning compressor, an air pump, an oil pump, and a CAN communication network. In an alternative embodiment, the other external components may also be one or more of the aforementioned components. In addition, a controller coolant inlet 113 is further formed in the first vertical wall 111.

Continuing to refer to FIGS. 2 and 3, the end cover 12 is located at an upper opening of the upper controller housing 11a and is detachably and fixedly connected to the upper controller housing 11a. The fixed connection is achieved in a manner including, but not limited to, screw connection, snap-fit connection, etc. A sealing rubber strip is arranged on the contact surface between the end cover 12 and the upper controller housing 11a, and cooperates with a fastener to achieve the water-proofing, dust-proofing and shock absorption effects.

Continuing to refer to FIGS. 2 and 3, in one or more embodiments, the partition 13 is arranged in the upper controller housing 11a, is integrally formed with the upper controller housing 11a by casting, and is configured to be substantially parallel to the end cover 12. The space above the partition 13 forms a first chamber 14, and the space below the partition 13 forms a second chamber 15 (see FIG. 5). The arrangement of two chambers improves the space utilization in the controller housing 11. Alternatively, the partition 13 may also be configured to be substantially perpendicular to the end cover 12 to form chambers on the left and right sides of the partition 13. Fixing columns 131 are provided on upper and lower surfaces of the partition 13. The power electronic modules may be fixedly connected to the fixing columns 131 by means of screw connection, clamping, etc. In an alternative embodiment, the fixing columns 131 are provided only on the upper surface of the partition 13 for mounting the power electronic modules arranged in the first chamber 14. The electronic modules arranged in the second chamber 15 may be mounted by means of the fixing columns or other fixing structures in the lower controller housing 11b.

As shown in FIGS. 4 and 5, a first vertical baffle 132 is provided on the upper surface of the partition 13. Based on the orientation shown in FIG. 4, a first sub-chamber 141 is formed on the right side of the first vertical baffle 132 for mounting an inverter. In the region of the first sub-chamber 141, a copper busbar passing hole 133 is further formed in the partition 13, so that the copper busbar, which extends from the inverter and enables conduction of three-phase alternating current, can pass through the copper busbar passing hole and be connected to the electric motor mounted in the lower housing 20. A second vertical baffle 134 is further provided on the lower surface of the partition 13. The second vertical baffle 134 and the first vertical baffle 132 have the same shape, and are symmetrically arranged about the plane where the partition 13 is located as the center plane. Based on the orientation shown in FIG. 5, a second sub-chamber 151 is formed on the right side of the second vertical baffle 134 for mounting a DC/DC converter.

Continuing to refer to FIGS. 4 and 5, in one or more embodiments, a plurality of first wiring holes 135 are further formed in the partition 13. The first wiring holes 135 enable the first chamber 14 to be in communication with the second chamber 15, so that the symmetrically arranged first vertical baffle 132 and second vertical baffle 134 and the upper controller housing 11a together enclose a third sub-chamber 142 that extends from the first chamber 14 to the second chamber 15. Portions of a high-voltage power distribution module are mounted on the upper and lower surfaces of the partition 13, respectively (i.e., the high-voltage power distribution module is mounted in the third sub-chamber 142), and connecting wires of the high-voltage power distribution module pass through the first wiring holes 135. Since the high-voltage power distribution module is relatively large in size, the above configuration not only fully utilizes the space in the controller housing 11, but also ensures the high-voltage power distribution module to be securely installed. In an alternative embodiment, it is also possible to form a larger passing hole in the partition 13 or provide no partition 13 in the third sub-chamber, so as to accommodate the installation of the high-voltage power distribution module.

Continuing to refer to FIGS. 4 and 5, in one or more embodiments, a third vertical baffle 136 and a second wiring hole 137 are further provided on the upper surface of the partition 13. The third vertical baffle 136 partitions a portion of the space of the first sub-chamber 132 to form a fourth sub-chamber 143. Wires, which pass through the side wall 111 in the region where the fourth sub-chamber 143 is located and are connected to the external connection wiring harness, need to be provided on the inverter, the DC/DC converter and the high-voltage power distribution module, and can extend from the second wiring hole 137 into the fourth sub-chamber 143 and then be connected to the predetermined wiring terminals. This configuration not only improves the space utilization in the controller housing 11, but also facilitates the subsequent inspection and maintenance. Alternatively, the fourth sub-chamber 143 may also be arranged at other suitable positions, or the fourth sub-chamber 143 may be eliminated, so as to accommodate the connection lines of the power electronic modules.

It should be noted that the partition 13 and the vertical baffles on the partition may also be configured in other suitable shapes, positions and numbers to divide the controller housing 11 into more sub-chambers to hold more power electronic modules, thereby improving the integration degree of the motor drive system housing 1 according to the invention. Other power electronic modules include but are not limited to an on-board charger, a DC/AC converter, etc.

The partition 13 is further provided with a cooling flow channel in communication with the controller coolant inlet 113, so that the coolant flows through the controller coolant inlet 113 and in the controller housing 11 along the cooling flow channel, so as to cool the power electronic modules therein. In one or more embodiments, the cooling flow channel includes a first flow channel 138 and a second flow channel 1391 connected in series. The first flow channel 138 is formed in the lower surface of the partition 13, and the second flow channel 1391 is formed in the upper surface of the partition 13.

Continuing to refer to FIGS. 3 and 4, in one or more embodiments, a boss 139 integrally formed with the partition 13 is provided on the upper surface of the partition 13 in the region where the first sub-chamber 141 is located. An open water channel is provided in the middle of the boss 139, and the water channel is the second flow channel 1391. When the inverter is mounted in the first sub-chamber 141, the pin-fin heat dissipation structure for IGBT in the inverter is inserted into the second flow channel 1391, and the sealing rubber ring on the heat dissipation structure can abut against an edge 1392 of the boss 139, so that the heat dissipation structure is connected to the second flow channel 1391 in a sealing manner. Alternatively, the second flow channel may also be configured in other shapes matching the IGBT heat dissipation structure.

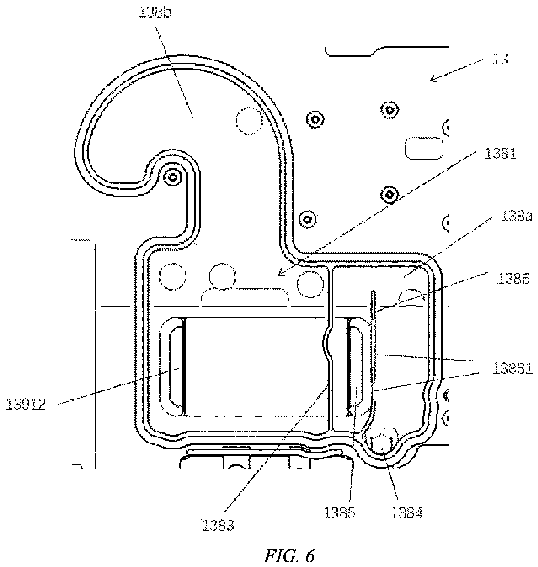

FIG. 6 is a schematic diagram of a first flow channel of an embodiment of a motor drive system housing for a vehicle according to the invention. As shown in FIGS. 5 and 6, in one or more embodiments, on the lower surface of the partition 13 in the region where the second sub-chamber 151 is located, the first flow channel 138 is integrally formed with the partition 13 to cool the DC/DC converter, and is in fluid communication with the controller coolant inlet 113. As shown in FIGS. 5 and 6, the first flow channel 138 includes a water flowing channel 1381 integrally formed with the partition 13 and a cover plate 1382 connected to the water flowing channel 1381 in a sealing manner, so that the coolant flows in the first flow channel 138 without leaking into the controller housing 11. The cover plate 1382 is connected to the water flowing channel 1381 in a manner including, but not limited to, screw connection and welding. The cover plate 1382 may be made of a copper material to improve the heat dissipation efficiency, or may be made of an aluminum material to reduce the manufacturing cost. As shown in FIG. 4, the second flow channel 1391 has a second inlet 13911 and a second outlet 13912 opposite to each other.

Continuing to refer to FIG. 6, in one or more embodiments, the first flow channel 138 is divided into a first flow section 138a and a second flow section 138b by a separation rib 1383. In one or more embodiments, the first flow section 138a is configured as a "U"-shaped flow channel, and the second flow section 138b is configured as a "J"-shaped flow channel, thereby reducing flow resistance. Alternatively, the first flow section 138a and the second flow section 138b may also be configured in other suitable shapes. The first flow section 138a has a first inlet 1384, a first outlet 1385 and a flow guide rib 1386. A drainage opening 13861 is provided in the flow guide rib 1386 to reduce the flow resistance of the coolant at the first outlet 1385. The first outlet 1385 of the first flow section 138a is in communication with the second inlet 13911 of the second flow channel 1391, and the second flow section 138b is in communication with the second outlet 13912 of the second flow channel 1391. Therefore, along the flow direction of the coolant, the second flow channel 1391 is located between the first flow section 138a and the second flow section 138b, and they are connected in series. The coolant flows into the controller housing 11 from the controller coolant inlet 113, flows into the first flow section 138a of the first flow channel 138 via the first inlet 1384, and then flows out of the first flow section 138a from the first outlet 1385. The coolant leaving the first flow section 138a enters the second flow channel 1391 via the second inlet 13911, flows out of the second flow channel 1391 from the second outlet 13912, and then flows into the second flow section 138b. The coolant flows out of the controller housing 11 via the second flow section 138b. Alternatively, the first flow channel 138 may also be configured to have only the first flow section, and the coolant does not flow back to the first flow channel after flowing through the second flow channel. With the above configuration, the coolant first enters the first flow channel 138 located in the lower surface of the partition 13, then flows into the second flow channel 1391 located in the upper surface of the partition 13, and finally flows back to the first flow channel 138. This configuration is advantageous to prevent the coolant from directly entering the second flow channel 1391 and impacting the easily damaged IGBT heat dissipation structure. The area of the first flow channel 138 for cooling the DC/DC converter is usually larger than the area of the second flow channel 1391 for cooling the inverter. If the coolant flows "from top to bottom" (i.e., the coolant first enters the second flow channel and then flows into the first flow channel), the coolant is prone to impact and turbulence when entering the first flow channel 138 from the second flow channel 1391, which increases the flow resistance and in turn affects the heat exchange efficiency. In an alternative embodiment, the coolant may flow "from top to bottom", but it is necessary to prevent the coolant from directly impacting the IGBT cooling structure. For example, the coolant inlet is configured to have the fluid flow direction facing the partition 13, and a flow guide rib is provided in the first flow channel 138 by integrally forming or welding, so as to weaken the impact and turbulence of the coolant.

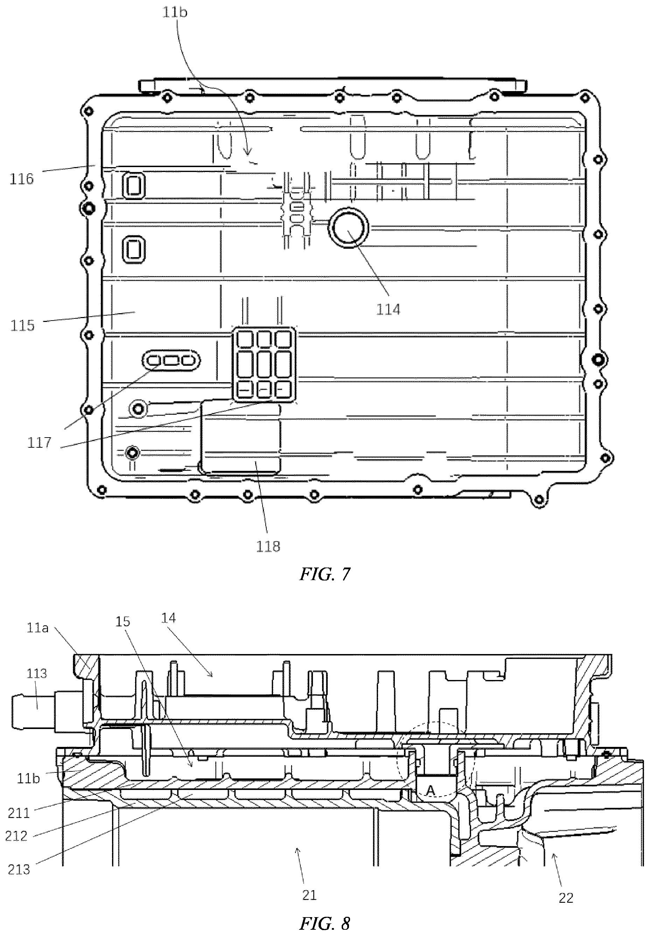

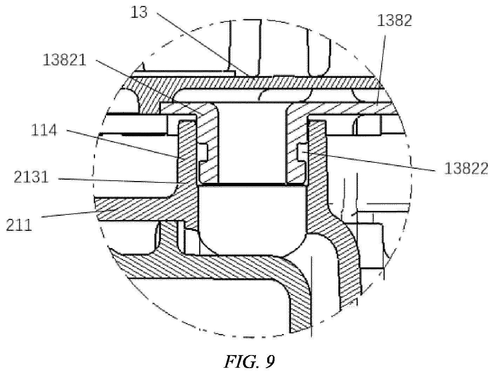

FIG. 7 is a schematic diagram of a lower controller housing of an embodiment of a motor drive system housing for a vehicle according to the invention; FIG. 8 is a cross-sectional view of an embodiment of a motor drive system housing for a vehicle according to the invention; and FIG. 9 is a partial enlarged view of part A of the motor drive system housing for a vehicle according to an embodiment of the invention in FIG. 8. As shown in FIGS. 5 and 9, the cover plate 1382 has a water outlet nozzle 13821, and the water outlet nozzle 13821 may be integrally formed with the cover plate 1382 or welded to the cover plate 1382. The water outlet nozzle 13821 is arranged on the second flow section 138b of the first flow channel 138 to enable the coolant to flow from the second flow section 138b into the next flow channel.

As shown in FIGS. 7 and 8, a controller coolant outlet 114 is provided in the lower controller housing 11b. The controller coolant outlet 114 is in communication with the water outlet nozzle 13821 to enable the coolant to flow out of the controller housing 11. As shown in FIG. 9, in one or more embodiments, the water outlet nozzle 13821 and the controller coolant outlet 114 are each configured as a tubular member, and the water outlet nozzle 13821 has a smaller diameter and is adapted to be inserted into the controller coolant outlet 114. An annular groove 13822 is provided in an outer wall of the water outlet nozzle 13821 to hold a sealing ring. In an alternative embodiment, other sealing methods, such as packing sealing and mechanical sealing, may be used between the water outlet nozzle 13821 and the controller outlet 114.

Continuing to refer to FIG. 7, the lower controller housing 11b further includes a bottom surface 115 and a second vertical wall 116 that has the same cross-sectional shape as the first vertical wall 111. Since the lower controller housing 11b is integrated with the electric motor housing 21 and the reducer housing 22, the bottom surface 115 is of an irregular shape, which reduces the manufacturing difficulty. A plurality of support stages 117 are provided on the bottom surface 115. The support stages 117 are adapted for mounting gaskets and abut against the power electronic modules mounted in the second chamber so as to achieve the supporting and buffering effects. A through hole 118 is formed in the bottom surface 115. The through hole 118 is located above the electric motor housing 21. The three-phase copper busbar extending from the inverter passes through the copper busbar passing hole 133, then passes through the through hole 118, and is finally connected to an electric motor in the electric motor housing 21.

Continuing to refer to FIGS. 2 and 8, in one or more embodiments, the electric motor housing 21 is configured for mounting a drive electric motor, and is substantially cylindrical. The electric motor housing 21 has an outer water jacket 211, an inner water jacket 212, and an electric motor cooling flow channel 213 formed between the outer water jacket 211 and the inner water jacket 212. Alternatively, the electric motor housing 21 may also use other suitable cooling structures. In one or more embodiments, the electric motor cooling flow channel 213 has an electric motor coolant inlet 2131 and an electric motor coolant outlet 2132. Since the lower controller housing 11b is integrated with the electric motor housing 21, the electric motor coolant inlet 2131 extends to and is in fluid communication with the controller coolant outlet 114, so that the cooling flow path of the controller and the cooling flow path of the electric motor are connected in series, which reduces the arrangement of pipes and sealing surfaces, thereby improving the integration degree of the housing. Alternatively, the electric motor cooling flow path and the controller cooling flow path may not be integrated together, but are two different cooling flow paths, which reduces the number of coolant cooling components and provides a better cooling effect.

Continuing to refer to FIGS. 1 and 2, the electric motor coolant outlet 2132 is formed in the outer wall of the electric motor housing 21. Therefore, when the motor drive system housing 1 for a vehicle according to the invention has been assembled (as shown in FIG. 1), the coolant can flow into the motor drive system housing 1 from the controller coolant inlet 114 and flow out from the electric motor coolant outlet 2132, so that the entire motor drive system housing 1 is cooled by one flow path, thereby greatly improving the integration degree of the housing.

Continuing to refer to FIG. 2, the reducer housing 22 is arranged at one end of the electric motor rotor spindle in the axial direction and is formed together with the electric motor housing 22 for mounting the reducer and the matching differential. In an alternative embodiment, the lower housing 20 may also allow integration of more transmission mechanisms, such as a half-shaft component. In addition, the electric motor housing 21 is provided with an electric motor end cover 23, and the reducer housing 22 is provided with a reducer end cover 24.

The vehicle according to the invention uses the motor drive system housing 1 for a vehicle described above. The vehicle may be any suitable electric vehicle, hybrid electric vehicle, etc.

Heretofore, the technical solutions of the invention have been described with reference to the preferred implementations shown in the accompanying drawings. However, those skilled in the art can readily understand that the scope of protection of the invention is apparently not limited to these specific implementations. Without departing from the principles of the invention, those skilled in the art may make equivalent changes or replacements to related technical features. The technical solutions obtained after these changes or replacements fall within the scope of protection of the invention.

## Claims

1. A motor drive system housing for a vehicle, **characterized in that** the motor drive system housing comprises:
an upper housing, which comprises an upper controller housing and an end cover for covering the upper controller housing, the end cover being detachably and fixedly connected to the upper controller housing, and a partition being provided in the upper controller housing; and
a lower housing, which is located below the upper housing and comprises at least a lower controller housing, an electric motor housing and a reducer housing which are integrally formed, wherein the lower controller housing is detachably and fixedly connected to the upper controller housing to form a controller housing, and the partition divides the controller housing into at least two chambers in which various power electronic modules of the vehicle are mounted.

2. The motor drive system housing for a vehicle according to claim 1, **characterized in that** the at least two chambers include a first chamber and a second chamber, wherein the first chamber is enclosed by the end cover, a side wall of the upper controller housing, and the partition; and the second chamber is enclosed by the lower controller housing and the partition.

3. The motor drive system housing for a vehicle according to claim 2, **characterized in that** a vertical baffle is provided on the partition and perpendicular to the partition, and divides at least one of the first chamber and the second chamber into a plurality of sub-chambers.

4. The motor drive system housing for a vehicle according to claim 3, **characterized in that** the plurality of sub-chambers include a first sub-chamber located in the first chamber, a second sub-chamber located in the second chamber, and a third sub-chamber extending from the first chamber to the second chamber,
wherein the first sub-chamber is configured for mounting an inverter, the second sub-chamber is configured for mounting a DC/DC converter, and the third sub-chamber is configured for mounting a high-voltage power distribution module.

5. The motor drive system housing for a vehicle according to any one of claims 1 to 4, **characterized in that**
a controller coolant inlet is formed in the side wall of the upper controller housing for introducing a coolant into the upper controller housing; and
the partition is integrally formed with the side wall, and a cooling flow channel is formed in the partition and is in communication with the controller coolant inlet.

6. The motor drive system housing for a vehicle according to claim 5, **characterized in that** the cooling flow channel comprises a first flow channel and a second flow channel connected in series, the first flow channel being formed in a lower surface of the partition, and the second flow channel being formed in an upper surface of the partition.

7. The motor drive system housing for a vehicle according to claim 6, **characterized in that**
the first flow channel comprises a first inlet and a first outlet, the first inlet being in communication with the controller coolant inlet; and
the second flow channel comprises a second inlet and a second outlet, the second inlet being in communication with the first outlet, such that the coolant flows into the first flow channel from the first inlet, flows out of the first flow channel from the first outlet and enters the second flow channel, and then flows out of the second flow channel via the second outlet.

8. The motor drive system housing for a vehicle according to claim 7, **characterized in that**
a controller coolant outlet is formed at the bottom of the lower controller housing for introducing the coolant into the electric motor housing, and the controller outlet is in communication with the second outlet and in communication with an electric motor coolant inlet formed in the electric motor housing.

9. The motor drive system housing for a vehicle according to claim 8, **characterized in that** the second outlet extends through a tubular member to a lower surface of the partition.

10. A vehicle, **characterized in that** the vehicle comprises a motor drive system housing for a vehicle according to any one of claims 1 to 9.
